# EUROPEAN PATENT APPLICATION

(11) **EP 4 701 134 A1**
(43) Date of publication of application: **25.02.2026**
(21) Application number: 25194102.7
(22) Date of filing: 05.08.2025
(51) Int. Cl.: H04L 9/40, G06Q 20/14, G06Q 50/06, H02J 3/00, H04L 9/32

(54) **APPARATUS FOR RENEWABLE ENERGY VERIFICATION**

(30) Priority: 23.08.2024 FI 20246054
(71) Applicant: Nokia Solutions and Networks Oy, 02610 Espoo (FI)
(72) Inventor: BOSKOV, Novak, Freiberg am Neckar (DE); RAMANAN, Buvaneswari, Scotch Plains, NJ (US); KHAN, Manzoor, New Providence, NJ (US); GUDAL, Aditya, Springfield, NJ (US); RIEMER, Joachim, Stuttgart (DE); SIENEL, Juergen, Leonberg (DE)
(74) Representative: Louis Pöhlau Lohrentz

(57) **Abstract**

The present invention discloses a first apparatus (100) for: determining a balance (B) of electrical energy during a predetermined time interval, cryptographically signing the balance (B) with a secret key; storing the signed balance (B) in a report (R) associated with the predetermined time interval. A second apparatus for receiving from a third apparatus (300), a message indicating an amount (U) of energy that a device for receiving electrical energy received during a time period of charging; obtaining a latest report (R) stored by the first apparatus (100) before the time period of charging, wherein the report (R) comprises a cryptographically signed balance (B); generating, using a secret key of the device for generating electrical energy from renewable energy, a zero-knowledge proof for a statement that the amount (U) of energy that the device for receiving electrical energy received is not higher than the balance (B) (U≤B); transmitting the zero-knowledge proof to the third apparatus. A third apparatus (300) for sending to a second apparatus, a message indicating an amount (U) of energy that the device for receiving electrical energy received during a time period of charging; receiving from the second apparatus, a zero-knowledge proof for a statement that the amount (U) of energy that the device for receiving electrical energy received is not higher than a balance (B) of electrical energy that is made available by a device for generating electrical energy from renewable energy before the time period of charging. A fourth apparatus (400) for use by a producer (140) of a device (110) for generating electrical energy from renewable energy, comprising means for: determining a pair of public key and secret key; storing the secret key in a secure element of the device (110) for generating electrical energy from renewable energy; transmitting the public key to a public verifiable registry (150).

## Description

### Field of the invention

Various example embodiments relate to renewable energy systems, specifically to verification of energy source.

### Background

Electrical vehicles (EVs) bring vast benefits to consumers, the environment, and the world economy. To realize the foreseen benefits, EVs require a dedicated infrastructure of charging stations.

The participants in the grid, which is capable of producing energy from renewable energy sources such as wind turbines and solar panels, are often referred to as "prosumers". The prosumers may have local energy surplus and seek avenues to distribute it.

Distributed EV charging systems bring together EV owners and prosumers to extend the EV charging grid and profit the prosumers. Prosumers, acting as energy providers, invest in compatible charging equipment and connect it to their local energy sources. As the prosumers' participation in the EV charging grid extends its coverage, the prosumers may get directly or indirectly incentivized to participate (e.g., by the local authorities). On the other hand, EV owners, acting as energy receivers, want to verify that the energy indeed comes from renewable sources. The EV owners have an incentive to provide verifiable proof of consuming renewable energy to claim credits, reimburse costs, or make use of renewable energy tariffs.

The above-described set of incentive mechanisms opens an immense space for malversations. For instance, malicious energy providers may enter the market falsely claiming to sell energy from renewable sources to gain the incentive benefits, while at the same time overloading the existing grid infrastructure. The state-of-the-art technology lacks the ability to tackle these problems.

There is thus a need for an improved method and apparatus to solve the aforementioned problems.

### Summary of the Invention

The invention is set out in the appended set of claims.

According to a first aspect of the invention, there is provided a first apparatus for use by a device for generating electrical energy from renewable energy, comprising means for: determining a balance of electrical energy during a predetermined time interval, wherein, the balance is related to an amount of electrical energy that is made available by the device for generating electrical energy during the predetermined time interval; cryptographically signing the balance with a secret key; storing the signed balance in a report associated with the predetermined time interval.

According to a second aspect of the invention, there is provided a second apparatus for use by a device for transmitting electrical energy generated from renewable energy by a device using a first apparatus as described above, the second apparatus comprising means for: receiving from a third apparatus, a message indicating an amount of energy that a device for receiving electrical energy received during a time period of charging; obtaining a latest report stored by the first apparatus before the time period of charging, wherein the report comprises a cryptographically signed balance; generating, using a secret key of the device for generating electrical energy from renewable energy, a zero-knowledge proof for a statement that the amount of energy that the device for receiving electrical energy received is not higher than the balance (U≤B); transmitting the zero-knowledge proof to the third apparatus.

According to a third aspect of the invention, there is provided a third apparatus for use by a device for receiving electrical energy, comprising means for: sending to a second apparatus, a message indicating an amount of energy that the device for receiving electrical energy received during a time period of charging; receiving from the second apparatus, a zero-knowledge proof for a statement that the amount of energy that the device for receiving electrical energy received is not higher than a balance of electrical energy that is made available by a device for generating electrical energy from renewable energy before the time period of charging.

According to a fourth aspect of the invention, there is provided a fourth apparatus for use by a producer of a device for generating electrical energy from renewable energy, comprising means for: determining a pair of public key and secret key; storing the secret key in a secure element of the device for generating electrical energy from renewable energy; transmitting the public key to a public verifiable registry.

According to a fifth aspect of the invention, there is provided a computer readable medium comprising program instructions for causing a first apparatus to perform at least the following: determining a balance of electrical energy during a predetermined time interval, wherein, the balance is related to an amount of electrical energy that is made available by the device for generating electrical energy during the predetermined time interval; cryptographically signing the balance with a secret key; storing the signed balance in a report associated with the predetermined time interval.

According to a sixth aspect of the invention, there is provided a computer readable medium comprising program instructions for causing a second apparatus to perform at least the following: receiving from a third apparatus, a message indicating an amount of energy that a device for receiving electrical energy received during a time period of charging; obtaining a latest report stored by the first apparatus before the time period of charging, wherein the report comprises a cryptographically signed balance; generating, using a secret key of the device for generating electrical energy from renewable energy, a zero-knowledge proof for a statement that the amount of energy that the device for receiving electrical energy received is not higher than the balance (U≤B); transmitting the zero-knowledge proof to the third apparatus.

According to a seventh aspect of the invention, there is provided a computer readable medium comprising program instructions for causing a third apparatus to perform at least the following: sending to a second apparatus, a message indicating an amount of energy that the device for receiving electrical energy received during a time period of charging; receiving from the second apparatus, a zero-knowledge proof for a statement that the amount of energy that the device for receiving electrical energy received is not higher than a balance of electrical energy that is made available by a device for generating electrical energy from renewable energy before the time period of charging.

According to an eighth aspect of the invention, there is provided a computer readable medium comprising program instructions for causing a fourth apparatus to perform at least the following: determining a pair of public key and secret key; storing the secret key in a secure element of the device for generating electrical energy from renewable energy; transmitting the public key to a public verifiable registry.

According to the example embodiments, private key of a device for generating electrical energy from renewable energy is used to cryptographically sign the amount of electrical energy that is made available by the device. The private key is further used to generate a zero-knowledge proof to prove that the energy transmitted to an energy receiver is generated from renewable energy. Thereby the source of the electrical energy is verifiable. The unforgeable and verifiable cryptographic proof may be used by the energy receiver, such as EV owners, to prove that the energy they received comes from renewable sources. The proof may also be used by the energy provider to claim their incentive benefits. The space for malversations is closed.

### Brief description of the figures

For a more complete understanding of example embodiments of the present invention, reference is now made to the following descriptions taken in connection with the accompanying drawings in which:
Figure 1 shows a schematic view of the communication between various participants in which examples of disclosed embodiments may be applied;
Figure 2 shows a flow diagram for a fourth apparatus 400 according to one example embodiment.
Figure 3 shows a flow diagram for a first apparatus 100 according to one example embodiment;
Figure 4 shows a schematic view of a time line of operations according to various embodiments.
Figure 5 shows a flow diagram for a second apparatus 200 and a third apparatus 300 according to various example embodiments;
Figure 6 shows a block diagram depicting the apparatus 100, 200, 300, 400 operating in accordance with an example embodiment.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

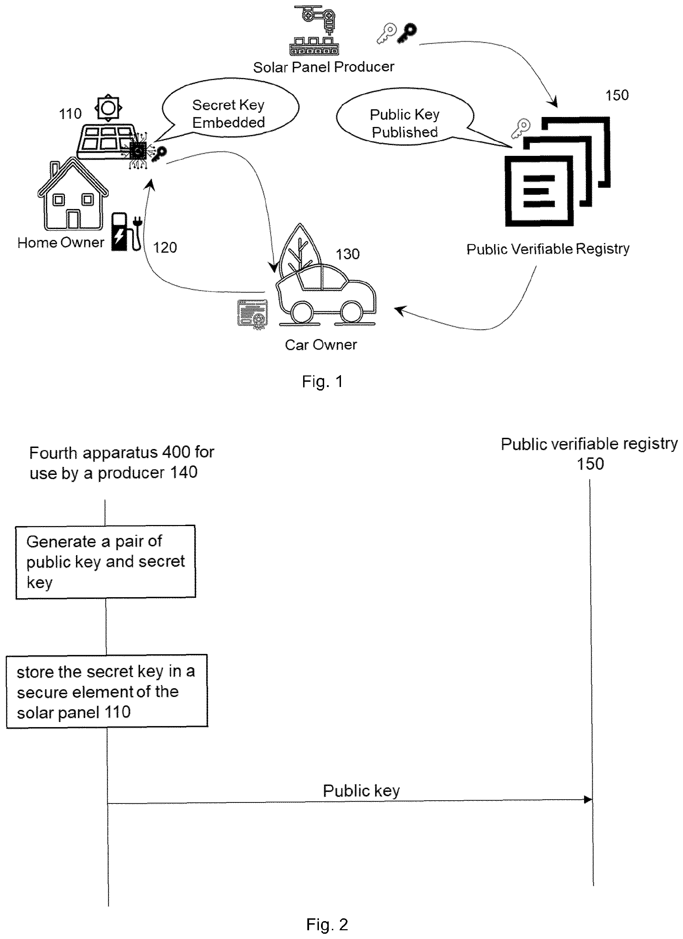

Figure 1 shows a schematic view of the communication between various participants in which examples of disclosed embodiments may be applied.

The participants include a producer 140, a device 110 for generating electrical energy from renewable energy, a charging station 120, an EV 130, and a public verifiable registry 150.

In Figure 1, the producer 140 may be a producer of a device 110 for generating electrical energy from renewable energy, for example wind turbines and solar panels.

The device 110 for generating electrical energy from renewable energy produced by the producer 140 may be installed for residential usage or commercial usage. In the example of Figure 1, the solar panel 110 is installed at a home owner for example on the house roof. In the following, examples will be described using solar panel 110 as the device 110 for generating electrical energy from renewable energy. A skilled person should understand, the device 110 for generating electrical energy from renewable energy is not limited to the given example.

The solar panel 110 generates electrical energy from solar energy and may be configured to provide the generated electrical energy to predefined entities, for example, the household appliances like refrigerator, TV, washing machine, dishwasher, and lights within the household, etc.

Alternatively or additionally, the solar panel 110 may also be configured to store the generated electrical energy in a storage device, such as a battery or the like.

The solar panel 110 may also be configured to provide surplus electrical energy to the electric grid.

In the example of Figure 1, the solar panel 110 is further configured to provide electrical energy to a charging station 120, where an EV 130 may receive electrical energy generated by the solar panel 110.

An EV 130 may receive electrical energy from the charging station 120 when the plug of the charging station 120 is connected to the EV 130, the plug may be connected for a time period of charging.

A public verifiable registry 150 stores public key of a device or a person, and may provide the public key upon request to the requester. A skilled person should know various ways of implementing a public verifiable registry 150.

It is apparent to a person skilled in the art that a distributed charging system may also comprise participants other than those shown in Figure 1.

Figure 2 shows a flow diagram for a fourth apparatus 400 according to one example embodiment.

In the example shown in Figure 2, the fourth apparatus 400 may be used by a producer of a device 110 for generating electrical energy from renewable energy, for example the producer 140 as shown in Figure 1.

The fourth apparatus 400 is configured to determine a pair of public key and secret key. A skilled person should know various methods to determine the pair of public key and secret key for cryptography. Different approaches may be applied depending on the capabilities of the hardware available in the solar panel 110. For example, the possible implementations may include standard Rivest, Shamir, & Adleman, 1977 and Diffie & Hellman, 1976.

The fourth apparatus 400 is further configured to store the secret key in a secure element of the device 110 for generating electrical energy from renewable energy.

For example, the generated secret key may be securely embedded into the device's Hardware Secure Module (HSM). HSM is a protected hardware component that holds cryptographic keys and performs cryptographic operations protecting the key from being compromised even by malicious parties that have physical access to the hardware. HSMs often involve a configuration stage, when the designers can inject the cryptographic keys that need to be protected in the future. This can be implemented using temper-resistant hardware modules (Skorobogatov, 2011).

The fourth apparatus 400 is further configured to transmit the public key to a public verifiable registry 150.

Specifically, the public verifiable registry 150 may be implemented using public key infrastructure (PKI) or a block chain. Given the minimal amount of information that needs to be stored, the designer may decide to use an available public blockchain or deploy their own. Any public database, preferably an unalterable database, can serve as a public verifiable registry 150, as long as all involved parties agree to use it. PKI may be used as the public verifiable registry 150 by providing the public keys required by various embodiment behind trusted Transport Layer Security (TLS) certificates.

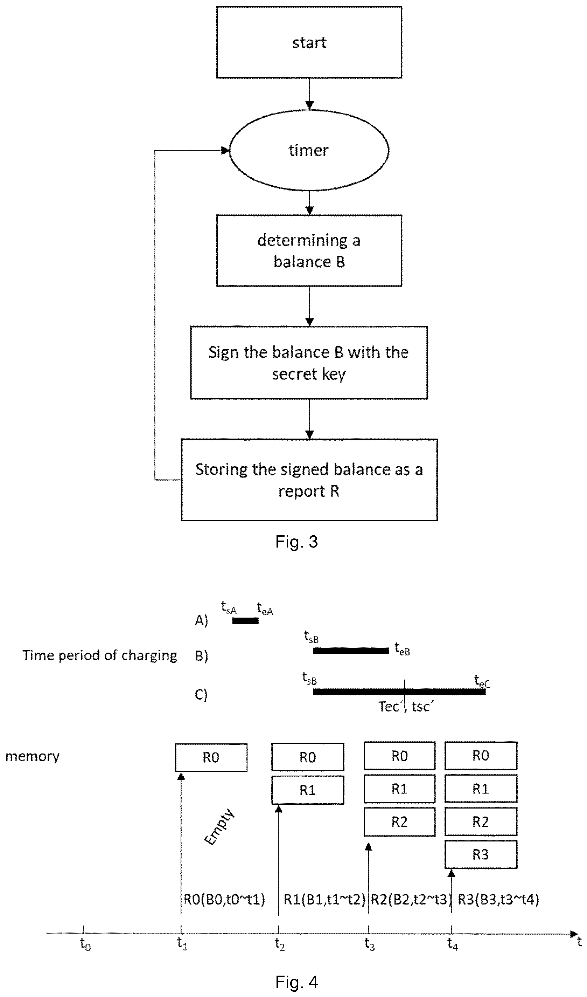

Figure 3 shows a flow diagram for first apparatus 100 according to one example embodiment.

The first apparatus 100 may be use by the device 110 for generating electrical energy from renewable energy. In one example, the first apparatus 100 may be implemented in the device 110, for example as a function block of the device 110. In another example, the first apparatus 100 may be implemented outside the device 110 and communicatively connected to the device 110, for example, as a plug in or a USB stick.

The first apparatus 100 is configured to determine a balance B of electrical energy during a predetermined time interval, wherein, the balance B is related to an amount of electrical energy that is made available by the device 110 for generating electrical energy during the predetermined time interval. The balance B indicates the amount of energy the device 110 can commit to the transfer.

For example, the first apparatus 100 may be configured to obtain a message indicating an amount of electrical energy E_{generated} that is generated by the device 110 during the predetermined time interval. The message indicating E_{generated} may be provided for example by another function block in the solar panel 110.

Optionally, in one example, the first apparatus 100 may be further configured to obtain a message indicating an amount of electrical energy E_{consumed} consumed by a predefined entity during the predetermined time interval. For example, the predefined entity may be for example the charging station 120, and household appliances like refrigerator, TV, washing machine, dishwasher, and lights within the household. In another example, the first apparatus 100 may be further configured to obtain a message indicating a total amount of electrical energy E_{consumed'} consumed by a plurality of predefined entities during the predetermined time interval. The message indicating E_{consumed} may be provided for example by another entity outside the solar panel 110 or another function block in the solar panel 110.

Alternatively or additionally, the first apparatus 100 may be further configured to obtain a message indicating an amount of electrical energy E_{battery} generated by the device 110 before the predetermined time interval and stored in a storage device (not shown) at a beginning of the predetermined time interval. The message indicating E_{battery} may be provided for example by a controller of the battery or another function block in the solar panel 110.

The first apparatus 100 may be further configured to determine the balance B of electrical energy based on the amount of electrical energy E_{generated} that is generated by the device 110 during the predetermined time interval, the amount of electrical energy E_{consumed} consumed by the predefined entity during the predetermined time interval and/or the amount of electrical energy E_{battery} stored in the storage device at the beginning of the predetermined time interval. For example, the balance B may be determined as B=E_{generated} + E_{battery} - E_{consumed..}

The first apparatus 100 is configured to cryptographically sign the balance B with a secret key assigned to the solar panel 110 to preserve its authenticity. For example, it may be the secret key stored by the producer of the solar panel 110 in its secure element. The first apparatus 100 may be configured to have privileged access to the secure element of the solar panel 110. In another example, solar panels already in use may be upgraded to implement various embodiments. Secret key may be retrospectively assigned to an existing solar panel for example by its producer. In one example, the producer supports remote control of the solar panel programmable module, they can install the key remotely. Alternatively, the producer may sell the simple pluggable device that only serves the purpose of a secure hardware module (i.e., stores the cryptographic keys).

The first apparatus 100 is configured to store the signed balance B in a report R associated with the predetermined time interval, in a storage accessible for the first apparatus 100 for example in a storage unit implemented together with the controller of the solar panel 110. Any subsequent tampering with the report R would result in the signature invalidation which can be easily detected. The balance B may also be stored in the storage accessible for the first apparatus 100 before it is signed.

The predetermined time interval may also be referred as report interval and can be set in the configuration phase. The purpose of these time intervals is to allow for sufficient granularity in reporting the amounts of energy made available by the device 110. The length of the report interval determines the accuracy of estimating the maximum amount of renewable energy that can be offered for transmission at any particular moment. In one example, the predetermined time interval may be for example 15 mins. On one hand, the smaller the intervals, the higher the accuracy. On the other hand, the predetermined time interval may be selected to provide acceptable accuracy using affordable computational load. In one example, various method may be implemented to adjust the length of the report interval dynamically during runtime. In one example, a machine learning predictor may be used to predict the length of the next charging session. Based on the expected length of the next charging session, the system may adjust the size of the current report interval.

Figure 4 shows a schematic view of a time line of operations according to various embodiments.

In Figure 4, the horizontal axis represents time. As shown in lower part of Figure 4, each report R is reported at the end of respective report interval and comprises a balance B and information about its corresponding time interval. For instance, a report R₀ is reported at t₁ and comprises a balance B₀ that is made available by the solar panel 110 during the time interval from t₀ to t₁. A further report R₁ is reported at t₂ and comprises a balance B₁ that is made available by the solar panel during the time interval from t₁ to t₂. The balance B of the report R indicates how much energy the prosumer has at their disposal at the end of the time interval that report R covers.

After the report is stored in the memory, it may be accessible to other entities, for example the apparatus 200 as will be elaborated later below. The content stored in memory marked with diagonal stripes are not relevant in this example.

The report R is stored at the predetermined time intervals. In the example shown in Figure 4, the length of the predetermined time intervals is not changed. In another example, the length of the predetermined time intervals may be adjusted and may vary from time to time as described above. The memory may store a plurality of reports. The memory may be overwritten after the report is stored for a predefined time duration which may relate to the size of memory. For example, the storage unit may store the report up to 72 hours. New report R replaces the old report which was stored 72 hours ago. In another example, when the upper limit of memory for storing the report is reached, the oldest reports may be deleted. A skilled person should understand, the duration for keeping the report may be different from the given example.

Additionally or alternatively, the first apparatus 100 may be further configured to send the report R to the home owner, so that the home owner is aware of the amount of energy available, so that the home owner could verify the balance B comprised in the report R using public key of the solar panel. In case the home owner has no interest to verify the balance, the first apparatus 100 may also send the balance B directly to the home owner.

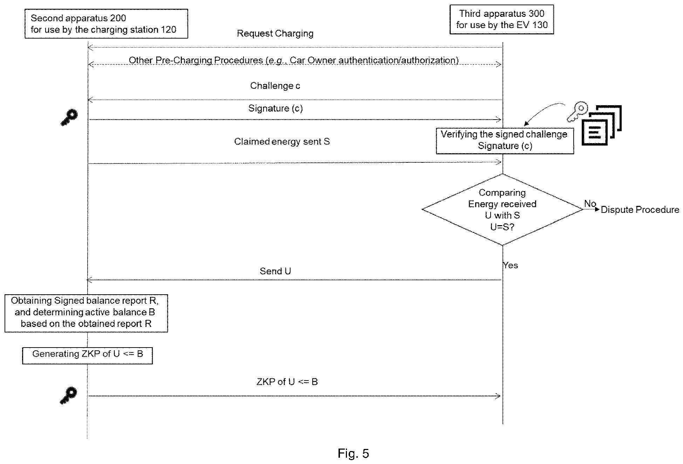

Figure 5 shows a flow diagram for a second apparatus 200 and a third apparatus 300 according to various example embodiments.

In the example of Figure 5, the second apparatus 200 may be used by a device 120 for transmitting electrical energy generated from renewable energy by a device 110. The device 110 uses the first apparatus 100 as described above to report balance. The device 120 may be for example the charging station 120 implemented near the home owner. The distance between the solar panel 110 and the charging station may be determined so that transmission of energy is feasible, or the energy loss during transmission from the solar panel to the charging station is below a predetermined threshold.

In one example, the first apparatus 100 and the second apparatus 200 may be implemented using same firmware. For example, the second apparatus 200 may also be implemented in the solar panel 110. The second apparatus 200 may be configured to have privileged access to the private key of the solar panel 110 stored for example in the secure element of the solar panel 110 or other places such as the pluggable device explained above. The charging station 120 may be communicatively connected to the second apparatus 200 thereby having access to the functions provided by apparatus 200. In one example, the second apparatus 200 may receive messages from the third apparatus 300 via the charging station 120.

In another example, the second apparatus 200 may be implemented outside the solar panel 110 and communicatively connected to the solar panel 110 so that it has privileged access to the private key of the solar panel 110. For example, the second apparatus 200 may be implemented as a USB stick.

The third apparatus 300 may be used by a device for receiving electrical energy, for example the EV 130 shown in Figure 1. In one example, the third apparatus 300 may be implemented in the "infotainment" system of the EV 130. In another example, the third apparatus 300 may be implemented as application on user's cell phone. In this case, the EV 130 may be communicatively connected to the third apparatus 300, thereby having access to the functions provided by apparatus 300. In one example, the third apparatus 300 may communicate with the second apparatus 200 via the EV 130, and/or the charging station 120.

The third apparatus 300 may be configured to send a charging request to the second apparatus 200. The charging request may be sent when the plug of the charging station is connected to the EV. In one example, the charging request may comprise a field indicating that the third apparatus 300 has the capability of verifying the origin of the energy.

In response to the charging request, the second apparatus 200 may send a message indicating that the second apparatus 200 is capable of proving an origin of the electrical energy to be transmitted, to the third apparatus 300.

The function of sending charging request is not necessarily implemented by the third apparatus 300. For example, it may be implemented by the device 130. Similarly, the function of sending response to the charging request is not necessarily implemented by the second apparatus 200 either. It may be implemented by the device 120 as well.

Optionally, this step may be followed with standard message exchanges such as authentication and authorization.

In one embodiment, the third apparatus 300 may be configured to send a random challenge number, denoted as c, to the second apparatus 200.

The second apparatus 200 may be configured to cryptographically sign the challenge c using the secret key assigned to the solar panel 110; and send the signed challenge to the third apparatus 300.

In another example, a chagrining station may connect to many solar panels. Specifically, in one example, an array of solar panels connects to the same secure element. The solar panels share one key and one challenge c is enough to attest that the secure module is authentic. In another example, each panel may have a separate secure module. In this case, the third apparatus 300 sends 'n' challenges to verify the authenticity of 'n' separate secure elements.

Prior to or after receiving the signed challenge from the second apparatus 200; third apparatus 300 may obtain, from a public verifiable registry 150, a public key of the device 110 for generating electrical energy, and verify the signed challenge with the public key.

The purpose of the challenge is to verify that the second apparatus 200 possesses the authentic hardware that will allow the rest of the protocol. Specifically, the third apparatus 300 verifies the authenticity of the solar panel 110 by verifying the signature on the challenge using the public key previously published by the renewable energy device producer.

Optionally, the second apparatus 200 may be configured to transmit to the third apparatus 300, a message indicating an amount of energy S provided to the device 130 during a time period of charging. The amount S may be considered as transmitted energy claimed by the second apparatus 200.

The time period of charging may be the time duration of energy transmission, specifically from the device 120 to the device 130.

Accordingly, the third apparatus 300 may determine whether the amount of energy S claimed by the second apparatus 200 matches with the amount U of energy that the device 130 received during the time period of charging. Upon successfully agreeing on the amount of energy involved in the interaction, the proving phase is started.

If S does not match U, a dispute procedure may be initialized.

If S matches U, the third apparatus 300 may send to the second apparatus 200, a message indicating the amount U of energy that the device 130 received during a time period of charging. Alternatively, the third apparatus 300 may send to the second apparatus 200, a message confirming that S matches U.

In another example, where the claimed energy S is not sent, the third apparatus 300 may still send, to the second apparatus 200, the message indicating the amount U of energy that the device 130 received during the time period of charging.

In yet another example, the claimed amount of energy S is not necessarily sent by the second apparatus 200. For example, it may be sent by the charging station 120.

The second apparatus 200 is configured to obtain a latest report R stored by the first apparatus 100 before the time period of charging, wherein the report R comprises a cryptographically signed balance B.

The second apparatus 200 may also have access to the storage unit where the first apparatus 100 stores the report R. Alternatively, the second apparatus 200 may receive the report R from the first apparatus 100.

Reference is made back to Figure 4, in the upper part of Figure 4, situations A), B) and C) with different time periods of charging are shown. In situation A), the time period of charging starts at t_{sA} between t₁ and t₂, and the time period of charging ends at t_{eA}, between t₁ and t₂ after tₛ. In situation B), the time period of charging starts at t_{sB} between t₂ and t₃, and the time period of charging ends at t_{eB}, between t₃ and t₄. In situation C), the time period of charging starts at t_{sB} between t₂ and t₃, and the time period of charging ends at t_{eC}, after t₄.

For situation A), the latest report R stored by the first apparatus 100 before the time period of charging is R0. For situation B) and C) the latest report R stored by the first apparatus 100 before the time period of charging is R1, since they start at the same time t_{sB}, and R1 is the latest report before t_{sB}.

A skilled person should understand, the charging station 120 may be controlled to transmit to the EV 130 an amount of energy corresponding to the balance B as indicated in the latest report before the time period of charging starts. To bring the balance B closer to the real value in practice, the length of the predetermined time interval may be reduced.

Optionally, the second apparatus 200 may be configured to obtain, from the Public Verifiable Registry, a public key of the device 110; and verify the signed balance B with the public key.

The second apparatus 200 is configured to generate, using the secret key of the device 110, a zero-knowledge proof (ZKP) for a statement that the amount U of energy that the device 130 received is not higher than the balance B, namely whether U≤B is true.

U≤B indicates that the amount of transmitted energy is less than or equal to what the device 110 had available at the beginning of the time period of charging. This proof technically certifies the validity of the transfer namely, the energy provider could possibly only transfer less than or equal to what they had available in the first place.

ZKP is a technique in public key cryptography that involves two main parties, referred to as the prover and the verifier, and allows the prover who knows a secret to prove that knowledge without revealing the secret itself. Contemporary ZKP systems allow for efficient proofs of simple statements such as the relation between a public and a secret value. For instance, given a public X and a Y known only to the prover, the prover can construct an efficient proof of X > Y that the verifier can independently verify.

Comparing to more complex statements which may be impractical to prove in contemporary embedded system hardware, the statement in this embodiment is easier to implement. Given the simplicity of this statement U≤B, the implementor may pick one of the modern and efficient zero-knowledge proof constructions based on Ben-Sasson, Chiesa, Tromer, & Virza, 2014 or Ben-Sasson, Bentov, Horesh, & Riabzev, 2018.

In the example where a chagrining station may connect to many solar panels, and each panel may have a separate secure module, each balance becomes the sum of balances from all 'n' separate panels. Although the ZKP construction is more complex (compute and time intensive), a skilled person should know various ways of implementation.

Furthermore, in order to exploit the energy newly generated during the time period of charging, the apparatus 200 and 300 may cooperate to split the time period of charging into a plurality of sub time periods of charging.

For example, in the situation C) shown in Figure 4, the time period of charging may be split into two sub time periods, from t_{sB} to t_{ec'} and from t_{sc'} to t_{eC}. t_{ec'} is same as t_{sc'} and between t₃ and t₄._{.}

The third apparatus 300 may be configured to send at the end of each sub time periods a sub amount U' of energy that the device 130 received during the sub time period of charging.

The second apparatus 200 may be configured to generate a ZKP for each U' received, based on the latest report R before the sub time period corresponding to the U'.

In the example of Figure 4, the apparatus 300 may send after t_{ec'} the sub amount U' that the device 130 received from t_{sB} to t_{ec'} to the apparatus 200, and send after t_{eC} the sub amount U" that the device 130 received from t_{sc'} to t_{eC} to the apparatus 200.

The second apparatus 200 may generate ZKP for U'≤B1 and ZKP for U"≤ B2. In the subsequent report reported during the time period of charging and after charging has started, for example, R2 in the situation C) shown in Figure 4, the charging session C) will be calculated as regular consumption.

In yet another example, multiple charging session may be implemented. For example, charging sessions B) and C) may be connected simultaneously to the charging station 120.

In one example, the second apparatus 200 may generate all the ZKPs at the end of the parallel session that ends last. For example, in the example above, considering the amount of energy that the charging session B received during the time period of charging is U_{B} reported at t_{eB}, the amount of energy that the charging session C received during the time period of charging is Uc reported at t_{eC}, the ZKP may be generated for U_{B}+U_{C}≤B1 after t_{eC}, and the ZKP (U_{B}+U_{C}≤B1) may be provided to both charging sessions B and C.

In another example, the first apparatus 100 may be configured to open multiple charging accounts, one per each parallel charger. The first apparatus 100 may keep separate reports (and balances) for each parallel charger. Alternatively, the first apparatus 200 may split the amount of balance to all parallel chargers, for instance, equally. In the case of two parallel chargers, the amount of energy the panel sends to the first "charging account" will be 50% of overall balance.

The second apparatus 200 is configured to transmit the zero-knowledge proof to the third apparatus 300.

A copy of the certificate that contains the independently verifiable zero-knowledge proof may be provided to the device 120 as well. To prove the possession of the certificate, each party can cryptographically bind it to their identity. One plausible implementation of this binding can involve the usage of Verifiable Credentials.

If the parties enter the dispute procedure, the certificate will not be issued. Therefore, from the perspective of certification, this was an unsuccessful interaction. In one example, a simple reputation system may be introduced in which the energy receiver and the energy provider can downgrade each other's reputation in case of a dispute.

Alongside the zero-knowledge proof asserting that the energy used in charging comes from renewable sources, the charging station may include information about the digital identities involved in the transfer. For instance, the prosumer may embed their digital identity and the digital identity of the EV owner. This compound information can further be expressed in some of the verifiable standardized formats such as Verifiable Credentials.

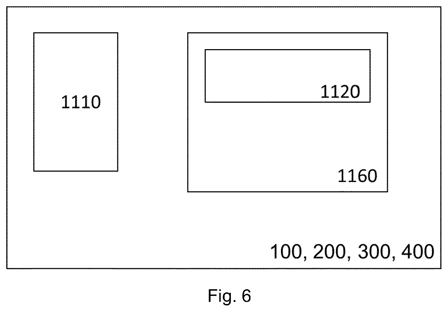

Figure 6 is a block diagram depicting the apparatus 100, 200, 300, 400 operating in accordance with an example embodiment. The apparatus 100, 200, 300, 400 may be, for example, an electronic device such as a chip, chip-set, an electronic device or an access network controller. The apparatus 100, 200, 300, 400 includes a processor 1110 and a memory 1160. In other examples, the apparatus 100, 200, 300, 400 may comprise multiple processors.

In the example of Figure 6, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus100, 200, 300, 400.

The memory 1160 stores computer program instructions 1120 which when loaded into the processor 1110 control the operation of the apparatus 100, 200, 300, 400 as explained above. In other examples, the apparatus 100, 200, 300, 400 may comprise more than one memory 1160 or different kinds of storage devices.

Computer program instructions 1120 for enabling implementations of example embodiments of the invention or a part of such computer program instructions may be loaded onto the apparatus 100, 200, 300, 400 by the manufacturer of the apparatus 100, 200, 300, 400, by a user of the apparatus 100, 200, 300, 400, or by the apparatus 100, 200, 300, 400 itself based on a download program, or the instructions can be pushed to the apparatus 100, 200, 300, 400 by an external device. The computer program instructions may arrive at the apparatus 100, 200, 300, 400 via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 100, 200, 300, 400 comprises means, wherein the means comprises at least one processor 1110, at least one memory 1160 including computer program code 1120, the at least one memory 1160 and the computer program code 1120 configured to, with the at least one processor 1110, cause the performance of the apparatus 100, 200, 300, 400.

Without in any way limiting the scope, interpretation, or application of the claims appearing below, a technical effect of one or more of the example embodiments disclosed herein is that the generation of electrical energy from renewable energy as well as the transmission of such energy is verifiable. The unforgeable and verifiable cryptographic proof may be used by the energy receiver, such as EV owners, to prove that the energy they received comes from renewable sources. The proof may also be used by the energy provider to claim their incentive benefits. The space for malversations is closed.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 6. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. A first apparatus (100) for use by a device (110) for generating electrical energy from renewable energy, comprising means for:
- determining a balance (B) of electrical energy during a predetermined time interval, wherein, the balance (B) is related to an amount of electrical energy that is made available by the device for generating electrical energy during the predetermined time interval;
- cryptographically signing the balance (B) with a secret key;
- storing the signed balance (B) in a report (R) associated with the predetermined time interval.

2. The first apparatus (100) according to claim 1, wherein the means are further configured for:
- obtaining a message indicating an amount of electrical energy consumed by a predefined entity during the predetermined time interval; and/or
- obtaining a message indicating an amount of electrical energy generated by the device (110) before the predetermined time interval and stored in a storage device at a beginning of the predetermined time interval;
- determining the balance (B) of electrical energy based on an amount of electrical energy that is generated by the device during the predetermined time interval, the amount of electrical energy consumed by the predefined entity during the predetermined time interval and/or stored in the storage device at the beginning of the predetermined time interval.

3. The first apparatus (100) according to claim 1, wherein the means are further configured for:
- dynamically adjusting a length of the predetermined time interval.

4. A second apparatus (200) for use by a device (120) for transmitting electrical energy generated from renewable energy by a device (110) using a first apparatus, the second apparatus (200) comprising means for:
- receiving from a third apparatus (300), a message indicating an amount (U) of energy that a device (130) for receiving electrical energy received during a time period of charging;
- obtaining a latest report (R) stored by the first apparatus (100) before the time period of charging, wherein the report (R) comprises a cryptographically signed balance (B);
- generating, using a secret key of the device (110) for generating electrical energy from renewable energy, a zero-knowledge proof for a statement that the amount (U) of energy that the device for receiving electrical energy received is not higher than the balance (B);
- transmitting the zero-knowledge proof to the third apparatus (300).

5. The second apparatus (200) according to claim 4, wherein the means are further configured for:
- obtaining, from a Public Verifiable Registry, a public key of the device for generating electrical energy from renewable energy; and
- verifying the cryptographically signed balance (B) with the public key;

6. The second apparatus (200) according to any of claims 4-5, wherein the means are further configured for:
- receiving a random challenge number from the third apparatus (300);
- cryptographically signing the challenge using the secret key;
- sending the signed challenge to the third apparatus (300).

7. The second apparatus (200) according to any of claims 4-6, wherein the means are further configured for:
- receiving a charging request from the third apparatus (300);
- transmitting, in response to the charging request, a message indicating that the second apparatus is capable of proving an origin of the electrical energy to be transmitted, to the third apparatus (300).

8. The second apparatus (200) according to any of claims 4-7, wherein the means are further configured for:
- transmitting to the third apparatus (300), a message indicating an amount of energy (S) provided to the device for receiving electrical energy during the time period of charging.

9. A third apparatus (300) for use by a device for receiving electrical energy, comprising means for:
- sending to a second apparatus (200), a message indicating an amount (U) of energy that the device for receiving electrical energy received during a time period of charging;
- receiving from the second apparatus (200), a zero-knowledge proof for a statement that the amount (U) of energy that the device for receiving electrical energy received is not higher than a balance (B) of electrical energy that is made available by a device (110) for generating electrical energy from renewable energy before the time period of charging.

10. The third apparatus (300) according to claim 9, wherein the means are further configured for:
- sending a random challenge number to the second apparatus (200);
- receiving a signed challenge from the second apparatus (200);
- obtaining, from a public verifiable registry (150), a public key of the device for generating electrical energy;
- verifying the signed challenge with the public key.

11. The third apparatus (300) according to any one of claims 9-10, wherein the means are further configured for:
- sending a charging request to the second apparatus (200);
- receiving from the second apparatus (200) a message indicating that the second apparatus (200) is capable of proving an origin of the electrical energy.

12. The third apparatus (300) according to any one of claims 9-11, wherein the means are further configured for:
- receiving from the second apparatus (200), a message indicating an amount of energy (S) provided to the device for receiving electrical energy during the time period of charging;
- sending to the second apparatus (200), the message indicating the amount (U) of energy that the device for receiving electrical energy received during the time period of charging, upon determining that the amount of energy (S) claimed by the second apparatus (200) matches with the amount (U) of energy that the device for receiving electrical energy received during the time period of charging.

13. A fourth apparatus (400) for use by a producer (140) of a device (110) for generating electrical energy from renewable energy, comprising means for:
- determining a pair of public key and secret key;
- storing the secret key in a secure element of the device (110) for generating electrical energy from renewable energy;
- transmitting the public key to a public verifiable registry (150).

14. The fourth apparatus (400) according to claim 13, wherein the public verifiable registry (150) is implemented using public key infrastructure or a block chain.
